# EUROPEAN PATENT APPLICATION

(11) **EP 2 657 885 A1**
(43) Date of publication of application: **30.10.2013**
(21) Application number: 13165162.2
(22) Date of filing: 24.04.2013
(51) Int. Cl.: G06K 9/00, G07C 9/02

(54) **Detection of passage in a revolving door**

(30) Priority: 24.04.2012 IT MI20120686
(71) Applicant: Cometa S.p.A., 50028 Tavarnelle Val di Pesa (FI) (IT); Persafe S.r.l., 53100 Siena (IT)
(72) Inventor: Anselmi, Enzo, 50021 BARBERINO VAL D'ELSA (FIRENZE) (IT); Mecocci, Alessandro, 50144 FIRENZE (IT); Frosali, Daniele, 53014 MONTERONI D'ARBIA (SIENA) (IT); Micheli, Francesco, 53014 MONTERONI D'ARBIA (SIENA) (IT)
(74) Representative: Tansini, Elio Fabrizio

(57) **Abstract**

The invention describes a passage-detecting apparatus for detecting the passage of a subject in an environment, wherein the apparatus comprises at least one sensor (1, 2) configured to detect an image of subjects (S) and a processing unit (10) in turn comprising an image acquisition module (11), configured to determine a corresponding cloud of points (N) representative of said passing through subjects (S); a segmentation module (12) configured to separate subsets (Ni) representative of different passing through subjects (Si); a representation module (13) configured to represent the subsets (Ni) as a function of numerical indices (In); a comparison module (14) configured to compare thenumerical indices (In) with predetermined classification parameters (I0) for classifying the passing through subject (Si).

## Description

### FIELD OF APPLICATION

The present invention relates to a passage-detecting apparatus.

In particular, the invention relates to an apparatus for detecting singleness of passage.

The apparatus has its main application in access control systems.

More generally speaking, the apparatus can have application in all systems wherein it is necessary to control and/or filter passages into and/or out of an environment.

### PRIOR ART

Passage control techniques relying on weighing systems, such as scales or electronic weighing platforms, are well known.

Other passage control techniques that exploit, for example, ultrasound systems, microwave systems, systems with optical barrier grids, turnstiles etc., are also known.

In general, though they have limits in their application and reliability, all of these techniques are adopted because to date no technique capable of providing sufficient guarantees is known.

In the worst cases, the control accuracy is so limited as to make the very presence of an automatic control not cost-effective, so that the presence of an operator is required instead.

The object of the present invention is to provide a device which allows to overcome the limits of the techniques adopted to date.

### SUMMARY OF THE INVENTION

This and other objects are achieved by a passage-detecting apparatus according to what is described in the appended claims.

The invention as described achieves the following technical effects:
- possibility of installing this device on already existing structures such as: tunnels, booths, revolving doors, interlocked doors, etc;
- resistance against circumvention attempts;
- reliability in every situation;
- greater effectiveness of use and better accuracy of results.

The aforesaid technical effects and other technical effects of the invention will emerge in greater detail from the following description of an examplary embodiment, given by way of illustration and not by way of limitation, with reference to the appended drawings.

### BRIEF DESCRIPTION OF THE DRAWINGS

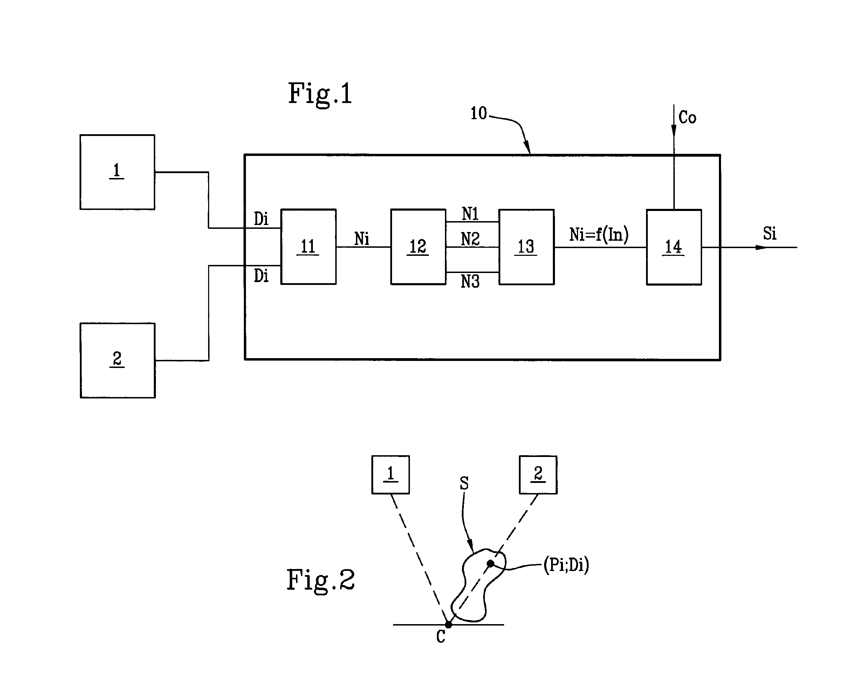

Figure 1 shows a block diagram of the apparatus of the invention.
Figure 2 shows a detail of the apparatus of the invention.
Figure 3 shows a block diagram of the steps of the invention.

### DETAILED DESCRIPTION

The apparatus can have application in all systems wherein it is necessary to verify and/or filter passages into and/or out of an environment, in order to ensure that the filtering/control takes places on a subject that is actually passing through, without the latter being able "in any way" to favour simultaneous access to another subject.

In other words, the device verifies the singleness of passage.

This need mainly arises in the following sectors /activities: credit institutions, airports, government agencies, railway stations, ports, post offices, large-scale retail, industry and the like.

Depending on destination, the primary check to be performed on a person may be of various types:
- identification by means of a badge;
- identification by means of a biometric system: fingerprint, iris, face;
- metal detector for weapons and metal;
- explosives inspection;
- drug inspection;
- count of people.

These checks can be individual but also combined, and in order to work automatically they require verification that a single generic subject is passing through.

Subject means any form that can be identified in an environment by the apparatus of the invention.

The apparatus according to the invention is set up in one of the aforesaid environments.

The apparatus according to the invention comprises at least one sensor 1, 2 configured to detect an image of subjects S inside the aforesaid environments.

In the installation step (step 0), the apparatus is calibrated according to the area/environment monitored. An absolute reference system XYZ is assigned; in the case considered the origin of the reference system is located at the vertex of the monitored area, at the height of the plane corresponding to the floor, and the installation positions of all of the (one or more) sensors provided are measured relative to it.

Then, via an interface wherein the central pixel of the image is highlighted, the corresponding point is measured (again using the reference system). The calibration process is thus completed.

The sensors return an image (in 4/3 format in the case considered), wherein to each pixel corresponds information on the measured distance of the shown point.

In other words, in the apparatus according to the invention, the at least one sensor 1, 2 is configured to detect an image of subjects S wherein each pixel Pi is representative of a distance (Di) from a predetermined calibration point (C) (step 1).

The at least one sensor 1,2 comprises an infrared camera (1, 2) and the distances (Di) are calculated relative to an optical centre of the camera.

In one embodiment of the invention, two sensors 1, 2 are present.

The apparatus acquires the images coming from each sensor via the physical connection present, which in the considered case is, preferably, a serial connection to a USB port.

According to the invention, the apparatus further comprises a processing unit 10.

The processing unit 10 in turn comprises an image acquisition module 11 configured to receive the distances Di.

The module is further configured to determine a corresponding cloud of point N representative of the passing through subjects S.

If two sensors 1,2 are present, the image acquisition module 11 is configured to determine a corresponding three-dimensional cloud of point representative of the passing through subjects S.

According to the invention, the image acquisition module 11 is configured to determine the cloud of point N using triangulation techniques.

In other words (step 2), using optimized triangulation techniques and suitable matrices for changing the reference system, the coordinates of the cloud of points expressed relative to the chosen reference system XYZ are obtained. At this point, by merging the information of the two sensors, it is possible to have, constantly and in real time, a three-dimensional representation of the entities present inside the detection tunnel/environment.

The processing unit 10 further comprises a segmentation module 12 configured to separate subsets Ni of the cloud of points N.

According to the invention, the subsets Ni are representative of different passing through subjects Si.

The segmentation module 12 is configured to represent the different passing through subjects Si by means of a centroid of the subset Ni of the cloud of points.

In other words, in order (step 3) to segment (separate from one another) the various entities present on the scene based on their attributes, it is necessary to apply clustering algorithms. To this end, clustering algorithms such as the k-means and expectation-maximization algorithms are applied to the cloud of points.

The output of these algorithms, which follow an iterative procedure, is a representation of each cluster (group) by means of a centroid (median point), minimizing the total intra-cluster variance.

The processing unit 10 further comprises a representation module 13 configured to represent the subsets Ni as a function of numerical indices In.

The numerical indices In can be representative of dimensions of the subjects at different heights relative to the ground level identified by the calibration point C.

Alternatively, or in addition, the numerical indices In are representative of a ratio between the width and height of each detected subject,relative to the calibration point C.

In other words, in this step (step 4), depending on the subjects present in the monitored area, there will be a variable number n of clusters/subsets Ni, which must be suitably characterized.

In this step, the shape and profiles of the entity/subset Ni are described in the form of numerical indices which subsequently enable the various types of subjects/number of people to be discriminated.

In particular, indices are defined which describe the dimensions of objects at different heights above ground level. When observing these indices on different types of objects, one will have different results.

Not only is the dimension checked at various levels, but a vertical index is also extracted which describes the ratio between width and height of each detected entity. This index is useful for discriminating the presence of any objects of an elongated shape, incompatible with the profile of a person. The processing unit also comprises a comparison module 14 configured to compare the numerical indices In with predetermined classification parameters C0 for classifying said passing through subject Si.

Preferably, the predetermined classification parameters C0 comprise pre-established thresholds configured by an operator of the apparatus in such a manner that they are suitable for the subjects S allowed to pass through. Alternatively, or in addition, the predetermined classification parameters C0 comprise a plurality of classification indices that are weighed and averaged out over predetermined time intervals.

In other words, in this step (step 5) the objective is to discriminate the presence of an individual person/subject from that of a number of people/subjects, the presence of a subject compatible with the expected dimensions in a given area of the monitored area and the presence of any objects abandoned on the scene. This discrimination is accomplished with a very low probability of error using suitable classifiers.

These classifiers are of varying types. The simplest one, which however has less firm theoretical bases, consists in comparing each dimension measured at every height with pre-established thresholds configured by the user, so that they adapt to the objects allowed to pass through.

More sophisticated classifiers are used, but they entail supervised training procedures.

Essentially, it is necessary to have the system view objects whose classification is known and extract a vector of the index values for each of them.

At the end of this process, one has a set of vectors of indexes related to the entities allowed to pass through and a set of vectors of indexes related to the entities not allowed to pass through.

The classifiers are trained in an optimal fashion by means of these two sets of vectors. The classifiers which give the best results are decision trees (CART) and boosting algorithms (AdaBoost).

The decision as to the presence of people (one or more persons), objects (objects that are allowed or not allowed) and abandoned objects, is made by assigning a suitable decision weight to each classifier for a detection period *t0*.

At the end of this period, the most "voted" condition is chosen and this is the condition that will be output by the apparatus.

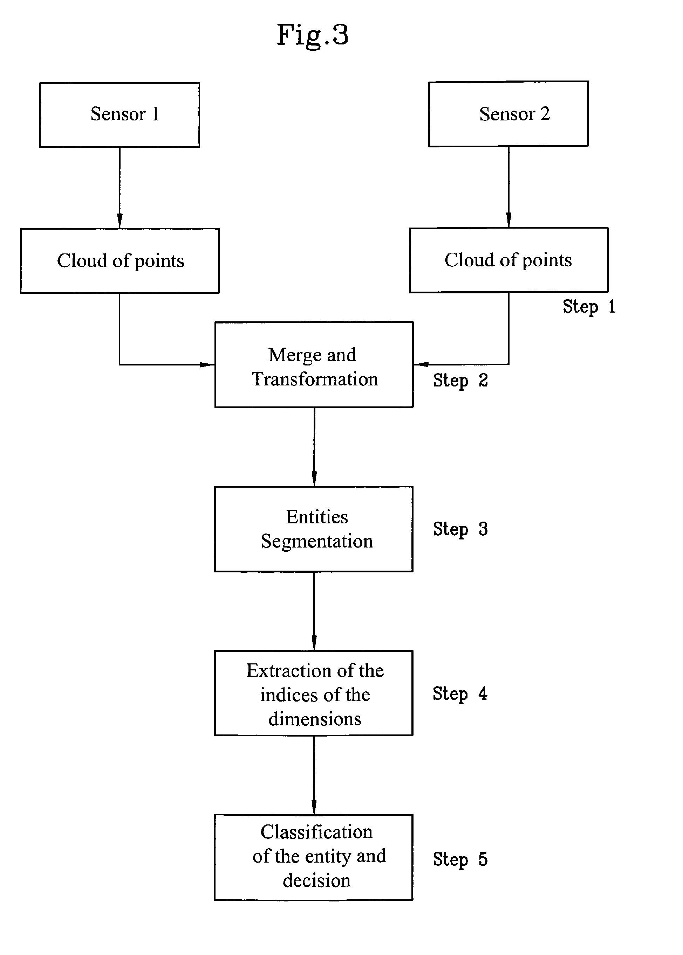

What has been described can be schematically illustrated as in figure 3.

## Claims

1. A passage-detecting apparatus for detecting the passage of a subject in an environment, wherein the apparatus comprises:
• at least one sensor (1, 2) configured to detect an image of subjects (S) in which each pixel (Pi) is representative of a distance (Di) from a predetermined calibration point (C);
• a processing unit (10) in turn comprising:
○ an image acquisition module (11) configured to receive said distances (Di) and determine a corresponding cloud of points (N) representative of said passing through subjects (Si);
○ a segmentation module (12) configured to separate subsets (Ni) of said cloud of points (N), in which said subsets (Ni) are representative of different passing through subjects (Si);
○ a representation module (13) configured to represent said subsets (Ni) as a function of numerical indices (In);
○ a comparison module (14) configured to compare said numerical indices (In) with predetermined classification parameters (C0) for classifying said passing through subject (Si).

2. An apparatus according to claim 1, wherein said sensors (1, 2) comprise an infrared camera and said distances (Di) are calculated relative to an optical centre of said camera.

3. An apparatus according to anyone of claims 1 or 2, wherein said image acquisition module (11) is configured to determine said cloud of points (N) through triangulation techniques.

4. An apparatus according to anyone of the preceding claims, wherein said segmentation module (12) is configured to represent said different passing through subjects (Si) by means of a centroid of said subset (Ni) of cloud of points.

5. An apparatus according to anyone of the preceding claims, wherein in said representation module (13) said numerical indices (In) are representative of sizes of said subjects at different heights relative to the ground identified by said calibration point (C).

6. An apparatus according to anyone of the preceding claims, wherein in said representation module (13) said numerical indices (In) are representative of a ratio between width and height of each detected subject, relative to said calibration point (C).

7. An apparatus according to anyone of the preceding claims wherein, in said comparison module (14), said predetermined classification parameters (C0) comprise predetermined thresholds configured by an operator of the apparatus in such a manner that they are suitable for the subjects (S) allowed to the passage.

8. An apparatus according to anyone of the preceding claims wherein, in said comparison module (14), said predetermined classification parameters (C0) comprise a plurality of classification parameters that are weighed and averaged out over predetermined time intervals.

9. An apparatus according to anyone of the preceding claims, comprising two sensors (1, 2).

10. An apparatus according to claim 9, wherein said image acquisition module (11) is configured to receive said distances (Di) from said two sensors (1, 2) and determine a corresponding three-dimensional cloud of points (N) representative of said passing through subjects (S).
